# EUROPEAN PATENT SPECIFICATION

(11) **EP 0 325 062 B1**
(45) Date of publication and mention of the grant of the patent: **02.08.1995**
(21) Application number: 88312392.9
(22) Date of filing: 29.12.1988
(51) Int. Cl.: H01L 41/08

(54) **Travelling wave motor**
Wanderwellenmotor
Moteur à ondes mobiles

(30) Priority: 29.12.1987 JP 332501/87; 09.01.1988 JP 1543/88 U
(43) Date of publication of application: 26.07.1989
(73) Proprietor: SEIKO INSTRUMENTS INC., Tokyo 136 (JP)
(72) Inventor: Kasuga, Masao, Koto-ku Tokyo (JP); Mori, Takayuki, Koto-ku Tokyo (JP); Tsukada, Nobuo, Koto-ku Tokyo (JP)
(74) Representative: Miller, Joseph

(56) References cited:
- EP-A- 169 297
- WO-A-87/05166

## Description

This invention relates to a travelling wave motor, e.g. a compact ultrasonic motor using ultrasonic oscillation and having an electro-mechanical transducer for generating a travelling-wave and a movable member driven by the travelling wave.

One known ultrasonic motor is a standing-wave type motor which employs a Langevin oscillator as a driving source. Such a motor is disclosed in US-A-4,019,073.

Another known ultrasonic motor is a travelling wave type motor employing a travelling wave generated on a stator for driving a rotor mounted on the stator. Such a travelling-wave motor produces smaller wear in the friction-transmission surface between the stator and the rotor, and can more easily be driven in the reverse rotation direction by comparison with the first-mentioned standing-wave type motor. Such a travelling-wave motor is disclosed in US-A-4,513,219 (Katsuma et al), US-A-4,562,374 (Sashida) and EP-A-169,297 (Tokushima).

Katsuma et al, and Sashida, however, disclose a travelling-wave motor employing a Ling type piezo-electric member. This type of travelling wave-motor essentially consists of an annular vibrator member having an annular piezo-electric vibrator thereon. In such a motor, however, the travelling wave is significantly damped to a certain degree due to the supporting structure provided, since the flexure mode travelling wave which has been excited by the piezo-electric vibrator has no nodal point of oscillation. As a result of this, the electro-mechanical transducing efficiency is low.

Another type of travelling-wave motor employing a disk-shaped piezo-electric member is disclosed in the above-mentioned European Patent Application of Tokushima. In this type of travelling-wave motor, a stator is constituted by a disk-shaped resilient vibrator member. In this motor there is the advantage that the vibrator member can be fixed and supported by the base of the motor at two places in the radial direction of the base, because the vibrator member is excited in a secondary oscillation mode in the radial direction of the vibrator member. However, in the case of a thin, small travelling wave-motor, a deterioration of efficiency is also quite unavoidable depending on the degree of separation of the node positions and the dimensions of the supporting area and the force, and since the driving frequency exceeds 100kHz for excitation in the secondary vibration mode, a deterioration in the circuit efficiency may result.

According, therefore, to the present invention, there is provided a travelling-wave motor comprising a support shaft; a vibrator member which is supported by the support shaft; vibration-effecting means for effecting vibration of the vibrator member so as to generate travelling waves therein; and a movable member, a portion of which contacts a part of the vibrator member so as, in operation, to be moved by the said travelling waves, wherein the said travelling waves are generated in the vibrator member radially of the support shaft, and wherein the said part of the vibrator member is situated at an output extracting position of the vibrator member set inwardly of the outermost periphery thereof, characterised in that the travelling waves are generated in a primary oscillation mode.

The movable member is preferably rotatably mounted on the support shaft.

Urging means are preferably provided for urging the said portion of the movable member and the said part of the vibrator member relatively into contact with each other.

The urging means preferably directly engages the movable member so as to urge the said portion into contact with the said part.

The urging means may be fixed to the support shaft.

The vibrator member is preferably firmly fixed to or is integral with the support shaft.

The said portion of the movable member preferably contacts the said part of the vibrator member substantially inwardly of the outer periphery of the latter. Thus the vibrator member may be disc-shaped and 2/5 r ≦ a ≦ 4/5 r, where r is the radius of the vibrator member and a is the radial distance of the centre of the said part from the centre of the vibrator member.

The said portion is preferably constituted by an annular projection of the movable member. Moreover, the said part of the vibrator member is preferably constituted by an annular projection of the latter which may be of toothed form.

If desired, the radial breadth of the annular projection of the movable member is less than that of the annular projection of the vibrator member. Moreover, if desired, the thickness of the vibrator member radially inwardly of its annular projection is less than its thickness radially outwardly thereof.

The support shaft is preferably made of an electrically conductive material.

The vibration-effecting means preferably comprises a disc-shaped piezo-electric vibrator carried by the vibrator member and provided with a plurality of angularly spaced apart electrodes arranged around a central hole.

The electrodes may be divided into first and second groups of angularly spaced apart electrodes whose electrodes are electrically connected to each other and are arranged alternately of the electrodes of the other group.

There may be pairs of adjacent electrodes of the same polarity which are arranged between pairs of adjacent electrodes of the opposite polarity.

Adjacent electrodes of each said group may be of opposite polarity.

In one embodiment the electrodes of the first group are electrically interconnected by an electrode disposed adjacent the central hole in the piezo-electric vibrator, and the electrodes of the second group are electrically interconnected by an electrode disposed adjacent the outer periphery of the piezo-electric vibrator.

If desired, the outermost and/or innermost peripheral portions of the piezo-electric vibrator are left blank of electrodes.

If desired, alternate electrodes respectively extend radially outwardly and radially inwardly of the adjacent electrodes.

In one embodiment, at least one of the electrodes has a marking portion to indicate its polarization.

In its preferred form, the motor of the present invention is thin and of small diameter, is of low electricity consumption, has a high electrical-mechanical translation efficiency, is driven by low driving frequency signals, and has a vibrator whose amplitude of vibration is less attenuated than in the prior art construction.

The invention is illustrated, merely by way of example, in the accompanying drawings, in which:-
Figure 1 is a longitudinal sectional view of a travelling-wave motor according to the present invention;
Figure 2 is a schematic view of a transducer illustrating the generation of a travelling wave;
Figure 3 is a schematic view illustrating how a rotor of a travelling-wave motor can be rotated by a travelling wave;
Figures 4 and 5 are longitudinal sectional views of prior art travelling-wave motors;
Figure 6 is a plan view showing electrode patterns which may be employed in a piezo-electric element of a prior art travelling-wave motor;
Figure 7(a) is a partial sectional view of a vibrator of the motor of Figure 1 showing a plurality of amplitude measuring points;
Figure 7(b) is a graph showing how the amplitude of vibration of the vibrator varies at the various amplitude measuring points when a vibrator member is made from stainless steel;
Figure 7(c) is a graph showing how the amplitude of vibration of the vibrator varies at the various amplitude measuring points when the vibrator member is made from brass.
Figure 8(a) is a partial sectional view of a vibrator of the motor of Figure 1 showing a plurality of output extracting positions;
Figure 8(b) is a graph illustrating the difference in the amplitude of vibration of the vibrator due to differences in the output extracting positions when the vibrator member is made from stainless steel;
Figure 8(c) is a graph illustrating the difference in the amplitude of vibration of the vibrator due to differences in the output extracting positions when the vibrator member is made from brass;
Figure 9 is a plan view showing an electrode pattern for a piezo-electric vibrator for use in the motor of Figure 1;
Figure 10 is a plan view showing another electrode pattern for the said piezo-electric vibrator;
Figure 11 is a plan view showing yet another electrode pattern for the said piezo-electric vibrator;
Figure 12(a) is a plan view showing the reverse side of a piezo-electric vibrator for use in the motor of Figure 1;
Figure 12(b) is a plan view showing another electrode pattern for the said piezo-electric vibrator;
Figure 13 is a plan view showing another electrode pattern for the said piezo-electric vibrator;
Figure 14(a) is a plan view showing a pattern of evaporated electrodes before a polarization process;
Figure 14(b) is a plan view showing the evaporated electrode pattern of Figure 14(a) after the polarization process;
Figure 15 is a longitudinal sectional view of another travelling-wave motor according to the present invention;
Figure 16(a) is a plan view showing a vibrator part of the motor of Figure 15;
Figure 16(b) is a sectional view showing the vibrator part of Figure 16(a);
Figure 17 is a longitudinal sectional view of yet another travelling wave-motor according to the present invention;
Figure 18 is a graph showing the relationship between the applied frequency and the impedance of the vibrator of the motor;
Figure 19 is an equivalent circuit diagram of the travelling-wave motor; and
Figure 20 is a graph showing the relationship between the applied frequency and the rotational frequency of the movable member of the motor.

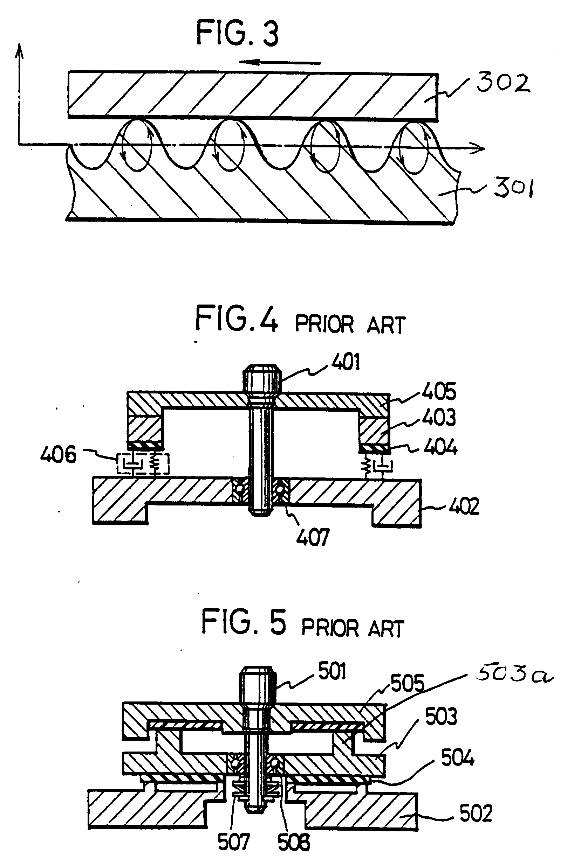

Figure 2 illustrates one example of how a travelling wave can be generated in a travelling-wave motor. The reference numeral 201 denotes a piezo-electric transducer consisting of piezo-electric ceramic or piezo-electric crystal material, which is polarized at equal intervals at a width b, with the adjacent polarizations being in opposite directions as illustrated. An electrode 202 is formed on each polarized portion of the piezo-electric transducer 201 by means of evaporating or plating a conductive material such as silver, nickel or the like, and the electrodes 202 are arranged in groups which are connected by signal lines 203, 204 each to have a high frequency voltage impressed thereon from a different signal source (not shown). A void c in width is provided between the electrode groups which are connected by the signal lines 203, 204. In this case, the void c in width may contain no polarization or electrode. The distance between the centres of the electrodes 202 on opposite sides of the void c will be denoted by a for the convenience of description.

The mechanism of the travelling wave generation will now be described with reference to Figure 2 and to the reference characters given therein. An inflected vibration wave consisting of a travelling wave and a regressive wave may be expressed by the following equation by taking the midpoint of an electrode portion as a reference:-$\text{Asin(ωt - kx) + Asin(ωt + kx)}$
Here, (a) indicates a so-called standing wave.

An inflected vibration wave on an electrode portion may be expressed as follows:-$\text{Bsin[ωt - k(x + a) + φ] + Bsin [ωt + k(x + a)]+ φ}$
where k = ω/» = 2π/λ,
λ: wavelength, φ: phase difference angle,

In Eq. (2) if$\text{-ka + φ = απ} \text{ka + φ = βπ}$
Then Eq. (2) may be expressed as:$\text{Bsin(ωt - kx + απ)+ Bsin(ωt + kx + βπ)}$

Accordingly, the inflected vibration wave excited by 201, 202, may be expressed by putting Eqs. (1) and (4) together. In this case if the condition for the presence of a travelling wave only is considered from the development of Eq. (4), it will be appreciated that this will occur where α is an even number and β is an odd number. Here, a is expressed by equations of α,and β may be given as follows from Eq. (3).$\text{a =} \frac{\text{λ}}{\text{4}} \text{(β - α)}$$\text{φ =} \frac{\text{π}}{\text{2}} \text{(α + β)}$
That is, when (α,β) = (0,1), (2,3), a =$\frac{\text{λ}}{\text{4}}$ , φ =$\frac{\text{π}}{\text{2}}$ ; when
(α,β) = (2,1) a =$\frac{\text{λ}}{\text{4}}$ , φ =$\frac{\text{3}}{\text{2}} \text{π}$ ; and when (α,β) = (0,3), a =$\frac{\text{3}}{\text{4}}$ λ, φ =$\frac{\text{3}}{\text{2}}$ .

Thus the travelling wave component is only present when a and φ are each satisfied concurrently. If, for example, the case where a =$\frac{\text{3}}{\text{4}}$ λ, b =$\frac{\text{λ}}{\text{2}}$ and φ =$\frac{\text{3}}{\text{2}}$ π is considered, then Eq. (1) + Eq. (2) will be:$\text{Asin(ωt - kx) + Asin(ωt + kx) + Bsin(ωt - kx) - Bsin(ωt + kx)}$
Here, if the amplitudes A and B of a high frequency voltage signal generated from a driving circuit are A = B, then Eq. (6) will be 2Asin(ωt - kx) and thus it will be understood that only the travelling wave component remains. Further, if a reverse drive of the regressive wave component only is to be made to remain, α and β in Eq. (5) will be inverted, so that α and β are odd and even respectively. When considered with reference to the transducer 201 in practice, the phase of the signal to be applied to the electrodes 202 may be shifted by 180° as compared with the case of forward drive.

Figure 3 illustrates how the travelling-wave motor is operated by a travelling wave component. Reference numeral 301 denotes a vibrator member which may generate an inflected vibration as it may comprise a piezo-electric vibrator bonded to a resilient member. When a travelling wave is generated rightward on the principle shown in Figure 2, one spot on the surface of the vibrator member 301 moves in a leftward elliptical path. Therefore a rotor part or movable member 302 moves counter to the direction of the travelling wave. The above is based on the reports in NIKKEI MECHANICAL (September 23, 1985) and elsewhere, and a detailed description on how one spot on the surface of the vibrator member 301 follows an elliptical path is also given therein.

Katsuma et al. and Sashida disclose a travelling-wave motor employing a Ling type piezo-electric member. Figure 4 shows a travelling-wave motor of this type. This type of travelling-wave motor essentially consists of an annular vibrator member 403 and a movable member 405 mounted thereon. The vibrator member 403 has an annular piezo-electric vibrator 404 thereon. The vibrator member 403 is connected to a base 402 through a supporting structure 406. On the annular piezo-electric vibrator 404, a gap having a length of half of the arc of an electrode is provided between two electrode groups. The travelling wave is brought about by applying an AC signal having a phase difference of 90° to the two groups.

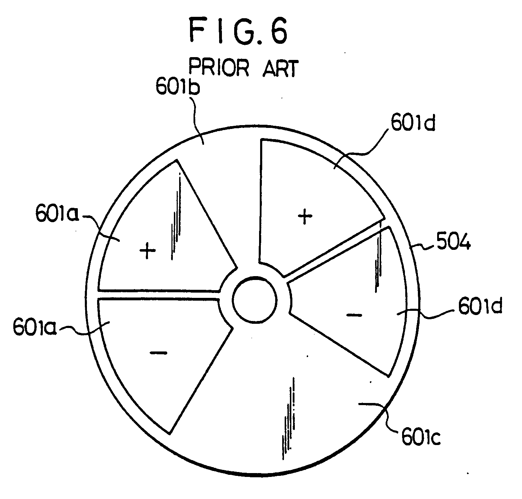

Another type of travelling-wave motor employing a disk-shaped piezo-electric member is disclosed in the above-mentioned European Patent Application of Tokushima. Figure 5 shows this type of travelling-wave motor. In Figure 5, a stator is constituted by a disk-shaped resilient vibrator member 503 having a toothlike annular projection 503a. The vibrator member 503 has a disk-shaped piezo-electric vibrator 504 thereon. A movable member 505 is provided on the projection 503a of the vibrator member 503 and has a central shaft 501 to act as a rotational guide, the central shaft 501 being mounted in bearings 508 in the vibrator member 503. A pressure-regulating device 507 is provided on the central shaft 501 for effecting a suitable contact pressure between the vibrator member 503 and the movable member 505 so that the travelling wave component can be efficiently transmitted to the movable member 505. The vibrator member 503 is supported on two circular projections formed on a base 502. The disk-shaped piezo-electric vibrator 504 consists of a plurality of electrodes arranged in such a manner that a plurality of equi-angularly spaced apart electrodes 601a (Figure 6) are provided on an almost semi-circular portion on one side of it as shown in Figure 6, and a plurality of equi-angularly spaced apart electrodes 601d are provided on the remaining almost semi-circular portion, with blank areas 601b and 601c left at 0.5 pitches and 1.5 pitches on opposite end portions. The piezo-electric vibrator 504 is polarized so that adjacent electrodes 601a and adjacent electrodes 601d are polarized in opposite directions as indicated in Figure 6.

For mounting in this case, almost semi-circular metallic plates, for example, are bonded conductively at almost every semi-circular electrode block to permit homopolarization electrically, and signals which are 90° different in phase are impressed thereon through two lead wires, thereby generating a travelling wave.

In a travelling-wave motor of the type described above, if its construction includes an annular vibrator member such as the member 403 of Figure 4, the travelling wave is significantly damped to a certain degree due to the supporting structure provided, since the flexure mode travelling wave which has been excited by the piezo-electric vibrator has no nodal point of oscillation. As a result of this, the electro-mechanical transducing efficiency is low.

If, on the other hand, the construction of the travelling-wave motor includes a disk-type of vibrator member such as the member 503 of Figure 5, there is the advantage that the vibrator member can be fixed and supported by the base at two places in the radial direction of the base, because the vibrator member is excited in a secondary oscillation mode in the radial direction of the vibrator member. However, in the case of a thin, small, travelling-wave motor, a deterioration of efficiency is also quite unavoidable depending on the degree of separation of the node positions and the dimensions of the supporting area and the force, and since the driving frequency exceeds 100kHz for excitation in the secondary vibration mode, a deterioration in the circuit efficiency may result.

If a piezo-electric element having the electrode patterns shown in Figure 6 is used, one standing wave is excited on one semi-circular portion, a standing wave 90° different in phase therefrom is excited on the other semi-circular portion, standing waves which are different from each other are propagated in the semi-circular portions on mutually opposite sides, and the two standing waves are thus synthesized to generate a travelling wave. Therefore a source for generating the two standing waves must be disposed on one side of the semi-circle and thus uniform travelling waves cannot be excited. As an indication of such a phenomenon, for example, some peaks in the frequency-amplitude characteristics can be observed in addition to a rise at the resonance point. Consequently, the electrical-mechanical transducing efficiency of the motor deteriorates.

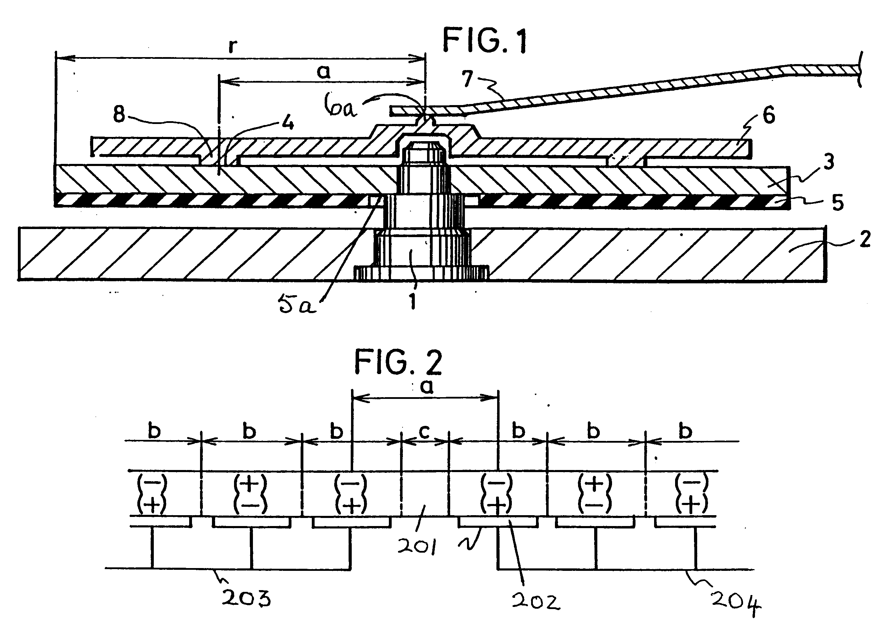

Figure 1 is a longitudinal sectional view of a travelling-wave motor according to the present invention. A central shaft 1 is secured to a base support 2 by a screw thread or force fit connection. A vibrator member 3, which carries a piezo-electric transducer 5, is secured to the central shaft 1 at its central portion. In the present embodiment, the vibrator member 3 consists of a resilient member such as a planar member of stainless steel, brass, duralumin or other metal and is supported substantially at its central portion on the central shaft 1. The mechanical resonance frequency of the central shaft 1 and of the base support 2 is substantially higher than that of vibrator member 3, piezo-electric transducer 5 and other parts supported by the central shaft 1, and the structure is such that leakage and attenuation of the vibration will hardly arise due to the rigidity of the base support 2.

The piezo-electric transducer 5 is made of at least one piezo-electric ceramic and has a hole 5a provided at its centre. Alternatively, the transducer 5 may be made of a piezo-electric ceramic consisting of several segments of an annular array or may have several annular arrays of electrodes capable of being polarized. The transducer 5 is secured to the surface of the vibrator member 3 opposite to where an output extracting position 4 is provided.

The central shaft 1 may consist of a conductive material such as a metal. In such a case, rear electrodes (not shown) which are provided on the rear side of the transducer 5 which contacts the vibrator member 3 are electrically contacted to the central shaft 1 through the vibrator member 3.

With the central shaft 1 acting as its centre of rotation, a movable member 6 is rotatably mounted by bearings (not shown) on the central shaft 1 so as to be urged into contact with a portion of the output extracting position 4 on the vibrator member 3 by a pressure regulating spring 7. In the embodiment shown in Figure 1, the pressure regulating spring 7 is platelike and is remote from both the base support 2 and the vibrator member 3, the pressure regulating spring 7 being arranged to apply pressure to a projection 6a which is provided at the central portion of the movable member 6. In this case, if the pressure generated on the movable member 6 by the pressure regulating spring 7 is N, the coefficient of friction between the vibrator member 3 and the movable member 6 is M, and the distance from the centre of the vibrator member 3 to the output extracting position 4 is a, then the torque T applied to the movable member 6 is T ⁼ MNa or so.

The output extracting position 4 is set so as to effect efficient translation of an infinitesimal flexural vibration amplitude of the travelling wave component excited by the vibrator consisting of the vibrator member 3 and the piezo-electric transducer 5 into a rotational motion of the movable member 6 . This may be achieved by providing at least one projection on either the vibrator member 3 or the movable member 6 which contacts the other member so that contact between the members 3, 6 occurs only at the projection or projections. In the Figure 1 embodiment, an annular projection 8, which may be of toothed form, is provided on the movable member 6 so as to contact with the vibrator member 3 at the output extracting position. Generally a component of the elliptical path produced by a travelling wave which contributes to the rotation of the movable member 6 has a speed difference and a phase shift in the circumferential direction at each position radially of the vibrator member 3. These factors therefore result in the braking of the rotational motion of the movable member 6 as an auto-rotation component. Accordingly, it is preferable that flexural vibration be removed by providing the output extracting position 4 at a radially outer part of the vibrator member 3 or the movable member 6 as described above.

The travelling-wave motor of the present invention is preferably of small size and low power consumption, with the result that the mechanical resonance frequency of the vibrator is inevitably high. Generally, a frequency exceeding 100 kHz may finally lead to a deterioration of the circuit efficiency of the driving system. Therefore, if the number of waves around the vibrator is 2 to 4, the vibrator must be excited radially in the primary vibration mode. When excited substantially at the driving frequency in the primary vibration mode, the amplitude of vibration increases towards the outside diameter and is maximized at the outermost periphery. Accordingly, it may be thought desirable to arrange that the output extracting position is set at the outermost periphery of the vibrator and that the movable member 6 is in contact therewith at this position. However, if the movable member 6 is brought into contact with the vibrator member 3 at the position of maximum amplitude, the general amplitude of vibration of the vibrator will in practice be attenuated to an extreme extent so that any resulting rotation of the movable member 6 will be at very low torque at best. Consequently, the pressure exerted by the pressure regulating spring 7 cannot be set high, and the motor efficiency will be at a low value. Thus, the closer the output extracting position 4 is to the inner periphery, the smaller is the extent of attenuation of the amplitude of vibration of the vibrator. However, if it is set so close to the central shaft 1, then since the amplitude itself at this position is small, only a weak rotational motion may result. Accordingly, if the radius of the vibrator member 3 is r, there exists something like an optimum value in the relationship thereof with the distance a from the centre to the output extracting position 4. Thus, in the case of a vibrator which is 5mm in radius and 1mm or below in thickness, the value varies according to the diameter of the central shaft 1. However, it is preferably set at about 2/5r ≦ a ≦ 4/5r for the motor efficiency. A detailed description will be given thereof below.

As described above, when effecting excitation at the driving frequency at which the vibrator member 3 and the piezo-electric transducer 5 are brought into primary vibration radially, it is desirable that the output extracting position 4 for driving the movable member 6 frictionally should be set at a position inwardly rather than at the outermost periphery of the vibrator member 3 in order to achieve better efficiency of the motor. Consequently, if as in Figure 1, the projection 8 at the output extracting position 4 is constituted by a projection of the movable member 6, the diameter of the movable member 6 may be smaller than the outside diameter of the vibrator member 3 subject to its being substantially larger than a.

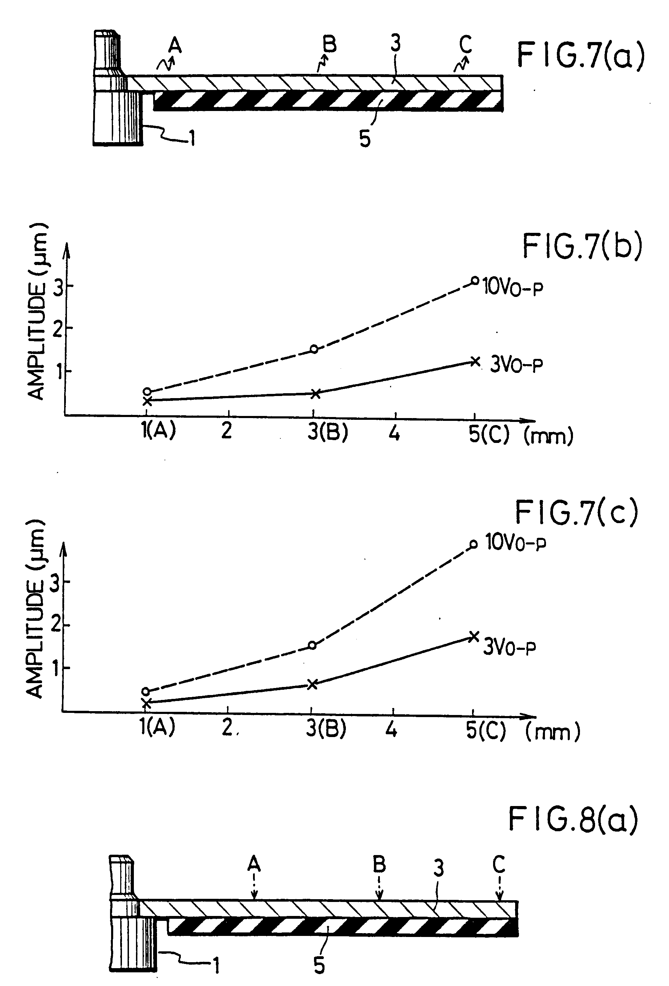

Figures 7(a) to 7(c) illustrate the radial behaviour of the travelling-wave motor of the present invention, wherein (a) is a fragmentary longitudinal sectional view of a part of the travelling-wave motor indicating a number of radially spaced apart amplitude measuring positions A, B and C. In order to measure the amplitude of vibration in a practical way, since the preferred travelling-wave motor of the present invention is thin and small in size, and the influence of the dead weight of a contact type displacement meter cannot be neglected, an optical non-contact type displacement meter is used. Figures 7(b) and (c) diagrammatically indicate amplitudes measured at each of the radial points A, B and C in the case of a travelling wave excited on the vibrator member 3 and the piezo-electric transducer 5. The graphs of Figures 7(b) and 7(c) are obtained on the basis that the number of waves excited in the circumferential direction is 3, the outside diameter and the thickness of both the vibrator member 3 and the piezo-electric transducer 5 are 10mm and 0.3mm respectively, and the vibration voltage is set at 3Vo-p and at 10Vo-p. Figure 7(b) illustrates the case where the vibrator member 3 is of stainless steel and the radial primary mechanical response frequency is about 45 kHz. Figure 7(c) illustrates the case where the vibrator member 3 is of brass and the radial primary resonance frequency is about 39.5 kHz. From a comparison of Figures 7(b) and 7(c), it will be understood that the variation in the radial displacement is usually increased towards the outer periphery and is maximized at the outermost periphery.

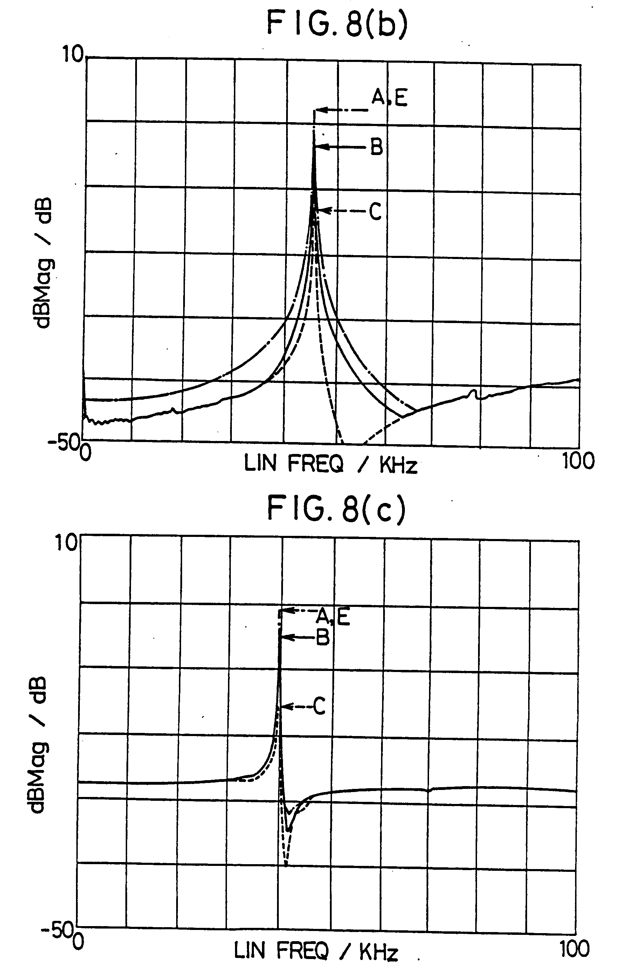

Figures 8(a) to 8(c) illustrate the variation in the amplitude of vibration of the vibrator due to a difference in the output extracting position, and show how the amplitude of vibration of the vibrator member varies as a result of a variation in the position at which the vibrator member and the movable member are in contact with each other. As in the case of Figure 7(a), Figure 8(a) is a fragmentary longitudinal sectional view of a part of the travelling-wave motor showing a plurality of radially spaced apart output extracting positions A,B, C, the movable member 6 being in contact with the vibrator member 3 substantially only at the positions A, B and C, Figures 8(b) and 8(c) showing the frequency characteristic of the vibrator at these positions.

A plurality of movable members 6 are provided each of which has a strip projection arranged to contact a selected one of the positions A, B and C, and each movable member 6 is remounted successively on the vibrator member 3 so that the attenuations of the vibrator amplitude can be compared. The dead weight of each movable member 6 is 0.3g in this case. If the piezo-electric transducer 5 is provided with two circuits, the method employed for measuring the frequency characteristics of the vibrator amplitude can comprise a technique wherein a cycle voltage is initiated in one circuit, thereby subjecting the vibrator to a standing wave excitation, and a back electromotive force is generated in the other circuit because of the piezo-electric effect, the results being subjected to Fourier conversion by a spectrum analyzer.

Figures 8(b) and 8(c) illustrate an attenuation mode of the amplitude near a mechanical resonance point of the vibrator, the results being achieved by remounting successively the movable members 6 each of which is in contact only with the vibrator member 3 at a respective position A, B and C and employing the aforementioned technique. The dimensions of the vibrator member 3, and the piezo-electric transducer 5 are the same as those referred to above in connection with Figure 7, and the impressed voltage is 5Vo-p. Figure 8(b) relates to the case where the vibrator member 3 is of stainless steel, and Figure 8(c) relates to the case where it is of brass. From a comparison of Figure 8(b) with Figure 8(c) it will be understood that B has a smaller maximum amplitude at the resonance point than A, and that C has a smaller maximum amplitude at the resonance point than B regardless of the materials. That is, the attenuation of the vibration increases more and more as the position at which the movable member 6 contacts the vibrator member 3 comes near to the outer peripheral portion. The reference letter E in Figures 8(b) and 8(c) indicates the maximum amplitude of the frequency characteristic of the vibrator which is examined without mounting the movable member thereon. However, there is no distinction observed between A and E as long as a movable member 6 weighing 0.3g or so is employed, and the contact of the movable member 6 with the vibrator member 3 at the position A is also obtained at an amplitude at which the vibrator is almost free.

By putting together the results illustrated in Figures 7 and 8, it can be concluded that when the travelling-wave motor of the present invention is excited at the driving frequency in a primary vibration mode radially, the amplitude of vibration increases towards the outer periphery. However, when the movable member 6 is disposed so as to come in contact only with the outer peripheral portion of the vibrator member 3, the amplitude attenuation increases, which is disadvantageous. That is, it can be said that there is an optimum location for the output extracting position at which the movable member 6 and the vibrator member 3 are in contact. Then, considering that the attenuation becomes excessive if this position is at the outermost periphery but, on the contrary, is minimised when it is set at the innermost periphery, and that it is not practical to have the output extracting position nearer than about one fifth of the radius r from the central shaft 1 if the movable member 6 is to have adequate strength against pressure applied to it, it is preferable that the output extracting position be set at about 2/5r ≦ a ≦ 4/5r. In this case, vibrations of the vibrator member 3 and of the piezo-electric vibrator 5 in a free state at the output extracting position 4 will be effective in minimizing the attenuation of an infinitesimal elliptical vibration generated on the surface of the vibrator member 3, which may be translated into a rotational motion of the movable member 6. Thus the optimum position for the output extracting position 4 can be chosen according to the outside diameter and the thickness of the vibrator member 3 and of the piezo-electric transducer 5 and the difference in pressure of the movable member 6. However, the value will be set at 2/5r ≦ a ≦ 4/5r, and thus a high efficiency and smooth rotational motion may be realized even at a low voltage on the travelling wave motor.

According to the aforementioned construction since the primary vibration mode is utilized diametrically of the vibrator member 3, the driving frequency can be lowered, and as the movable member 6 is pressed against and contacts the output extracting position 4 which is disposed within the outermost periphery of the vibrator member, the amplitude of vibration of the vibrator member 3 is less attenuated as compared with the case where the movable member 6 is brought into contact with an outer peripheral portion of the vibrator member 3 at which the displacement is maximized, thus allowing for efficient translation into rotational motion of the movable member.

Further, the vibrator member 3 is fixedly supported at the centre thereof so as to be fixedly secured to or integral with the central shaft 1. Therefore even a thin, small vibrator member 3 can be stably and easily supported without attenuating the travelling wave in most cases.

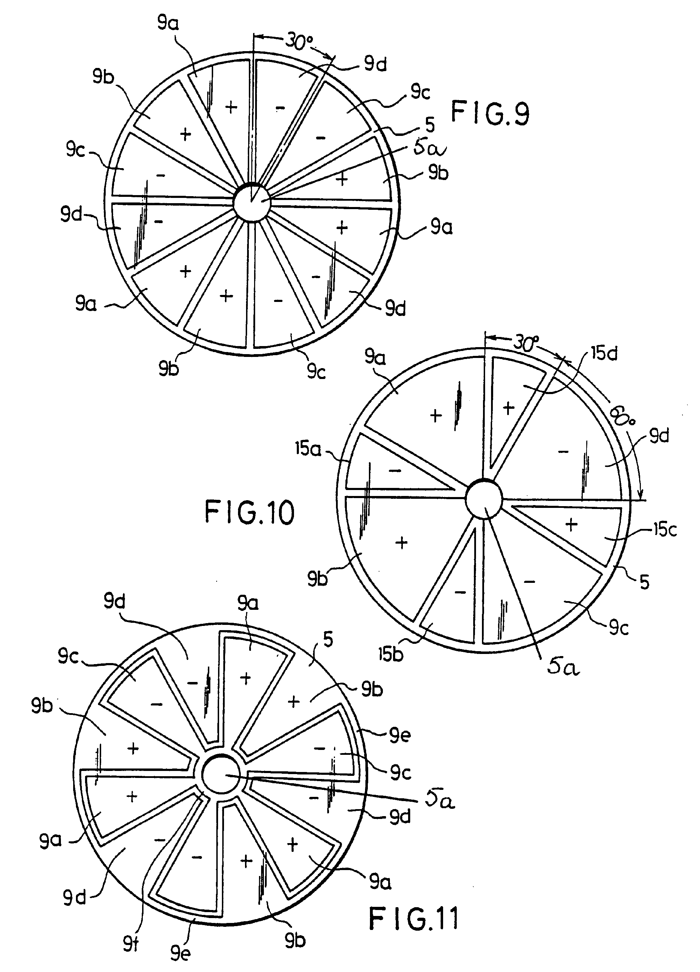

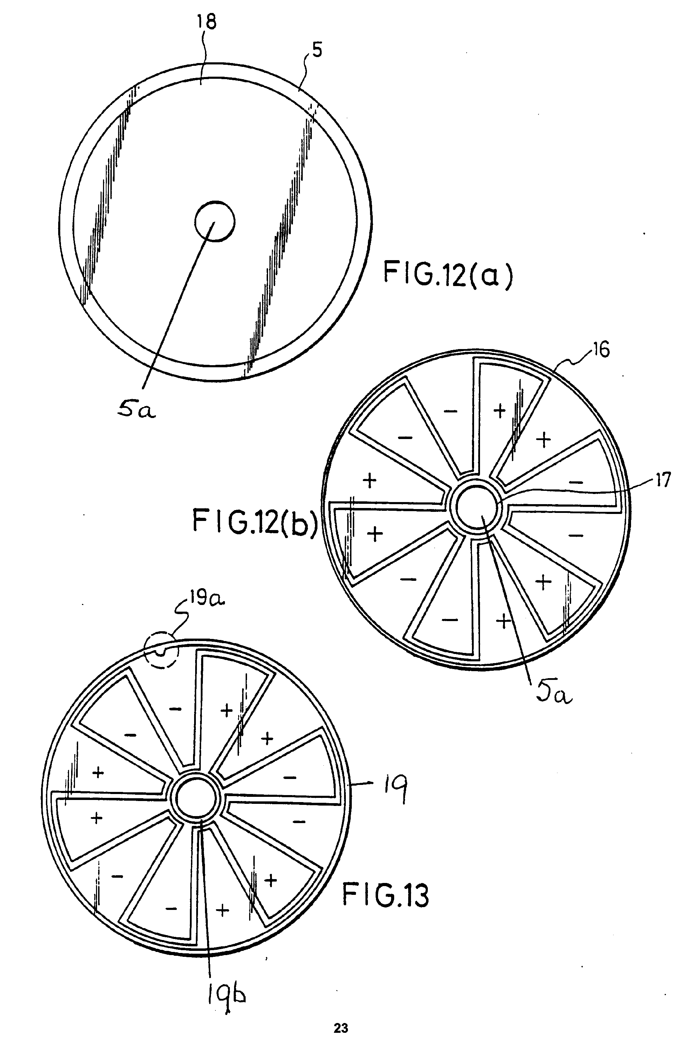

Figures 9 and 10 are plan views showing an electrode pattern which may be employed in the piezo-electric transducer 5 for travelling wave excitation.

In Figure 9, segmentary electrodes 9a to 9d are provided on one side of the piezo-electric vibrator 5 and the latter is provided with a hole 5a at its central portion. The arc length of each electrode is set to be almost 1/4 of an excited travelling wavelength including the clearance between the adjacent electrodes. With polarization of the electrodes 9a to 9d applied as illustrated, the same signal is impressed on the electrodes 9a and 9c and a signal shifted 90° in phase is impressed on the electrodes 9b and 9d, thereby exciting the travelling wave. Then, as mentioned hereinbefore, since the arc length of each electrode is 1/4 wavelength, one individual wavelength is formed of four portions corresponding to the electrodes 9a to 9d. Accordingly, the embodiment represents the case where the wave numbers 3. The reference character + in the drawings indicates that a positive field is applied to the electrodes on the back of the vibrator 5 by polarization, and the reference character - indicates that a negative field is applied to the electrodes on the back of the vibrator 5 by polarization. In this case, the back electrodes may be in the same position and of the same shape as the front electrodes or may collectively cover the whole of the back of the vibrator 5.

Figure 10 illustrates another electrode pattern, wherein segmentary electrodes 9a to 9d are provided on the surface of the piezo-electric transducer 5 and the latter has a hole 5a at its central portion. The transducer 5 also has electrodes 15a to 15d whose arc lengths are almost half the length of the arcs of the electrodes 9a to 9d, the electrodes 15a to 15d and 9a to 9d alternating with each other. Here, a polarization is applied as illustrated, and when high frequency voltages different in phase are inputted to each of the electrodes 9a to 9d according to the rule shown in Figure 2, the travelling wave component will be excited. In this case, the group of electrodes 15a to 15d, or another such group, can be utilized for frequency tracking and speed variation of the travelling-wave motor, the level and phase of the counter-electromotive voltage being generated at the time of the excitation of the vibrator member for detection as detection signals, and also utilized for driving when a spurious vibration generated at the time of the excitation of the vibrator member is microscopic, thereby intensifying the travelling wave component.

Figure 11 represents another electrode pattern for the piezo-electric vibrator 5, wherein segmentary electrode patterns 9a to 9d which are spaced apart at equal angular intervals are formed on one side of the piezo-electric vibrator 5 and the latter has a hole 5a at its centre. An adjacent pair of the electrodes 9a to 9d are polarized in the same direction and the next pair are polarized in the opposite direction, and so on. For example, the three pairs 9a, 9b are indicated in Figure 11 to be positive, and the three pairs 9c, 9d are indicated to be negative. After polarization, an electrode pattern 9e is formed along the outer periphery of the vibrator 5 for short-circuiting and interconnecting the electrodes 9b, 9d, and an electrode pattern 9f is formed along the inner periphery around the hole 5a for short-circuiting and interconnecting the electrodes 9a, 9c. For electrical polarity, two different electrodes such as an outer periphery short-circuited electrode and an inner periphery short-circuited electrode are disposed alternately, and for direction of polarization, each pair of positive or negative electrodes alternate with a pair which are polarized in the opposite direction, so that the electrodes are arranged in three sets of four electrodes. Thus a mechanical travelling wave in which the four electrode patterns 9a to 9d form one wave length is generated by impressing signals which are 90° different in phase in time on the outer periphery short-circuited electrodes and the inner periphery short-circuited electrodes.

Thus in contrast to what is shown in Figure 6, sources for generating two standing waves which are different in phase in time are not angularly spaced from each other but are disposed uniformly at each 1/4 wavelength so as to cover the whole circumference, as in Figure 11. Therefore a uniform travelling wave is generated covering the whole circumference.

According to the aforementioned construction, a mechanical travelling wave can be generated simply by mounting two lead wires regardless of the number of waves, and two standing waves can be generated uniformly around the whole piezo-electric element. Therefore, a uniform travelling wave is generated, and spurious waves etc. will not be observed. Consequently, the electrical-mechanical conversion efficiency is enhanced, the number of lead wires is minimized and the structure is simplified. Therefore, the requirements for miniaturization and reduction of the number of production process steps may be easily attained.

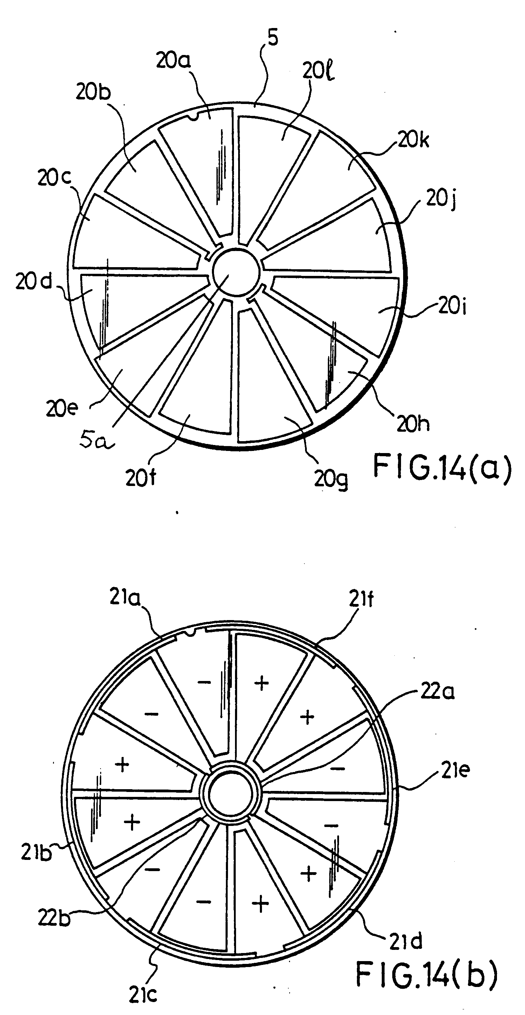

Figure 12(b) shows another electrode pattern which may be used in the piezo-electric vibrator 5 and in which circular blank portions 16 and 17 are provided at the outermost periphery of the vibrator 5 and at the periphery of the central hole 5a thereof respectively in order to prevent a leak current between the opposite sides of the vibrator 5 or a spark current derived from excess electrode materials used at the time of the application of a high voltage for effecting evaporation during the polarization process.

If the blank portions 16 and 17 are provided as described above, the back side of the vibrator 5 may be covered completely by one single electrode.

If a blank portion 18 is provided at the outermost periphery of the back side of the vibrator 5 as shown in Figure 12(a), the blank portion 16 on the front side of the vibrator 5 may not be required.

Figure 13 shows another electrode pattern for use in the piezo-electric vibrator 5 in which an outer short circuit electrode 19 has a marking portion 19a. A marking portion or portions (not shown) may also be provided on an inner short circuit electrode 19b. The marking portion is used to distinguish the direction of polarization of each electrode at the time of the polarization process and at the time of the connection of the lead wires.

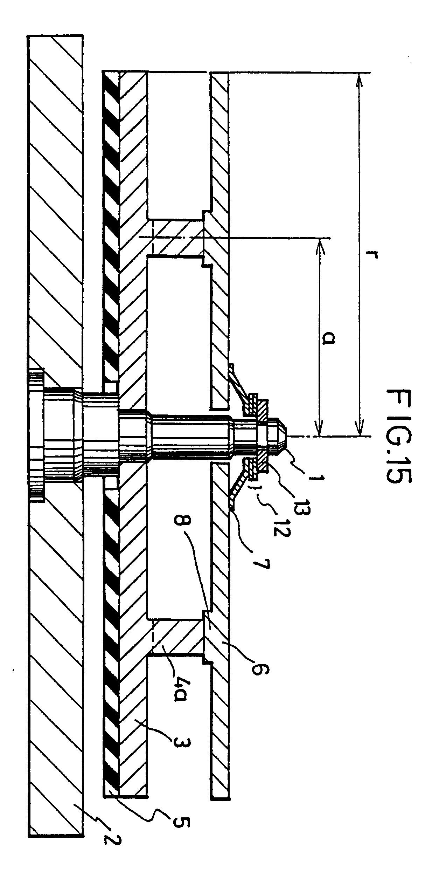

Figures 14(a) and 14(b) illustrate a process of forming by evaporation the electrodes shown in Figure 13 on the piezo-electric vibrator 5. Before a polarization process which is illustrated in Figure 14(a), a plurality of angularly spaced apart electrodes 20a to 20ℓ are evaporated onto the piezo-electric vibrator 5 by using a suitable mask. The electrodes 20a, 20c, 20e, 20g, 20i, 20k are radially outwardly elongated with respect to the other electrodes. On the other hand, the other electrodes 20b, 20d, 20f, 20h, 20i, 20ℓ are radially inwardly elongated at the central hole 5a. Two electrodes 20b and 20h which are diametrically opposite to each other have wider portions respectively at their radially inner ends in order to take account of the slight rotation of the piezo-electric vibrator 5 which may occur at the time of the evaporation of the electrodes after the polarization process.

The pattern of electrodes shown in Figure 14(a) may be achieved from a chromium film which contacts the piezo-electric material; a nickel film which covers the chromium film to permit soldering of a lead wire; and a gold film which covers the nickel film to prevent oxidization and to effect conductivity.

After the polarization process, as shown in Figure 14(b), outer electrodes 21a to 21f and inner peripheral electrodes 22a, 22b are evaporated so as to form the electrode structure shown in Figure 13.

Figure 15 is a longitudinal sectional view showing another embodiment of a travelling-wave motor according to the present invention. As in the case of Figure 1, a central shaft 1 is unified with a base support 2 through screwing or force fitting and a vibrator member 3 is securely fixed to the central shaft 1 at the central portion of the vibrator member 3, thus producing a centre-fixed support structure. What is characteristic of the embodiment of Figure 15 is the fact that at least one toothed displacement enlarging member 4a is provided at the output extracting position where the vibrator member 3 and a movable member 6 come in contact to translate the travelling wave component into a rotational motion.

Generally, a maximum value Umax of the lateral speed component of an elliptical path contributing to a rotational motion of the movable member 6 is expressed as:$\text{Umax = 2π² fξ (T/λ),}$
where
f is the driving frequency,
ξ is the longitudinal amplitude,
T is the thickness of the vibrator,
λ is the travelling wavelength.

Therefore, the thickness of the vibrator will have to be increased so as to enhance the rotational frequency. However, the mechanical stiffness increases excessively if the thickness is merely increased, and the resonance frequency also gets high. Accordingly, it is advisable that a toothed displacement enlarging member 4a which is rugged in shape should be provided inwardly of the periphery of the vibrator member 3. It is in fact preferable for the motor efficiency that the displacement enlarging member 4a be set in a position radially of the vibrator member 3 at about 2/5r ≦ a ≦ 4/5r as described hereinbefore. Further, the displacement enlarging member 4a may be unified in structure with the vibrator member 3. However, such toothing of the displacement enlarging member 4a will entail a high cost. Therefore the displacement enlarging member 4a will preferably be produced separately and then unified with the vibrator member 3 later. In this case, the displacement enlarging member 4a may also be formed solidly of plastics.

Moreover, in contrast to the plate-like pressure regulating spring structure shown in Figure 1, a more compact pressurizing device for pressurizing the movable member 6 is provided in the embodiment of Figure 15. The Figure 15 pressurizing device comprises a stopper 13 fitted in a recess in the central shaft 1; a pressure regulating spring 7 consisting of a cross spring or the like, and a washer 12 between the spring 7 and the stopper 13.

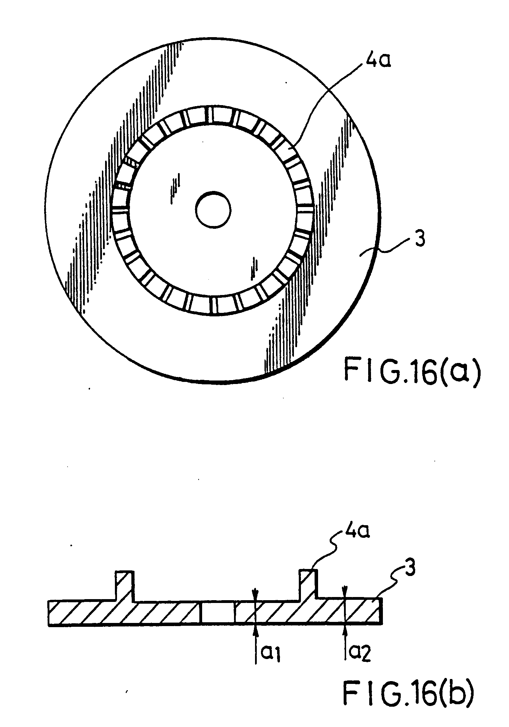

Figures 16(a) and 16(b) show one example of a displacement enlarging member 4a constituted by a strip-like annular member toothed with grooves which are radially arranged at equal angular intervals, the member 4a being disposed radially halfway of the vibrator member 3. In this case, if the spaces between the grooves is excessive, then the contact area with the movable member 6 decreases and thus the rotational frequency and torque will also be decreased. Further, if the teeth formed by the grooves are too high longitudinally, the teeth themselves will induce vibration so that the displacement enlarging member 4a will then cease to function as a rigid body and there will be a deterioration of the motor efficiency. The thickness a1 of the disk portion of the vibrator member 3 radially inwardly of the displacement enlarging member 4a may be less than its thickness a2 radially outwardly thereof to effect high efficiency of the motor.

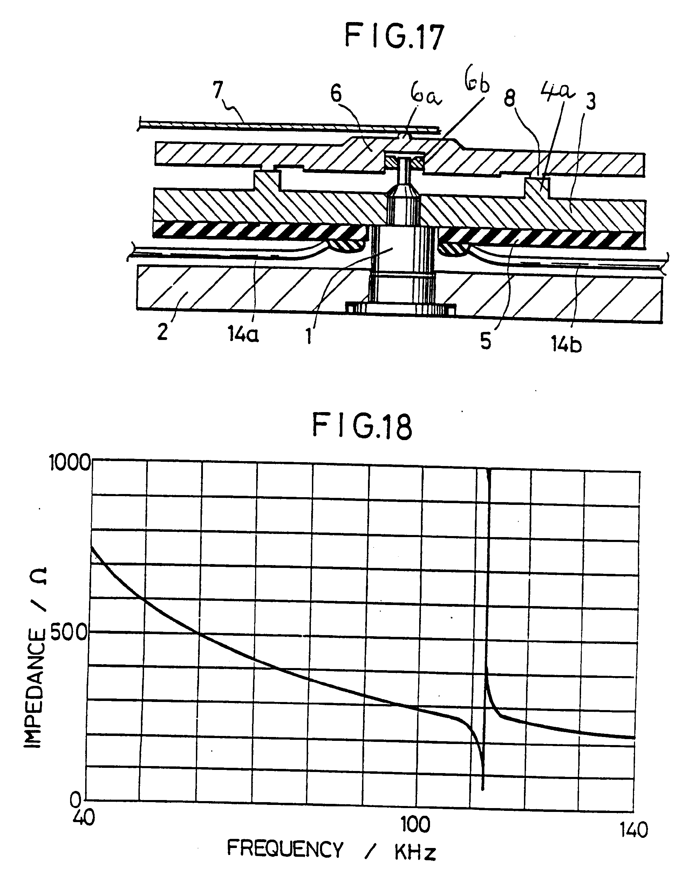

Figure 17 is a sectional view of yet another travelling-wave motor according to the present invention using an electrode structure of the piezo-electric vibrator 5 shown in Figure 11. In the Figure 17 construction, a vibrator member 3 having a piezo-electric transducer 5 bonded thereto is supported on a central shaft 1 by being a force fit thereon or the like, and the central shaft 1 is fixed to a base support 2. A movable member 6 is rotatably mounted by means of a bearing 6b on the upper end of the central shaft 1 above the vibrator member 3 and is urged towards the latter by a pressure spring 7 which acts against a projection 6a on the movable member 6. One 14a of two lead wires 14a, 14b is mounted on one part of the outer periphery short-circuited electrodes 9b, 9d, 9e shown in Figure 11, and the other lead wire 14b is mounted on one part of the inner periphery short-circuited electrodes 9a, 9c, 9f through soldering or the like. Thus the vibrator member 3 generates a mechanical travelling wave and the movable member 6 pressed onto the vibrator member 3 rotates when signals which are 90° different in phase in time are impressed on the two lead wires 14a, 14b.

The radial breadth of the annular projection 8 of the movable member 3 may be narrower than that of the tooth like projection 4a of the displacement enlarging member since if the material of the movable member 6 is softer than that of the displacement enlarging member 4a, the contact portion of the projection 8 is worn away.

The displacement enlarging member 4a is set in a position radially of the vibrator member 3 at about 2/5r ≦ a ≦ 4/5r as described hereinbefore.

Figure 18 shows one example of the impedance characteristic of the travelling-wave motor shown in Figure 17 at the time of applying high voltage between one of the lead wires 14a, 14b, and the vibrator 5. The impedance characteristic is measured when the movable member 6 is detached from the main body of the motor. The motor is as specified below.

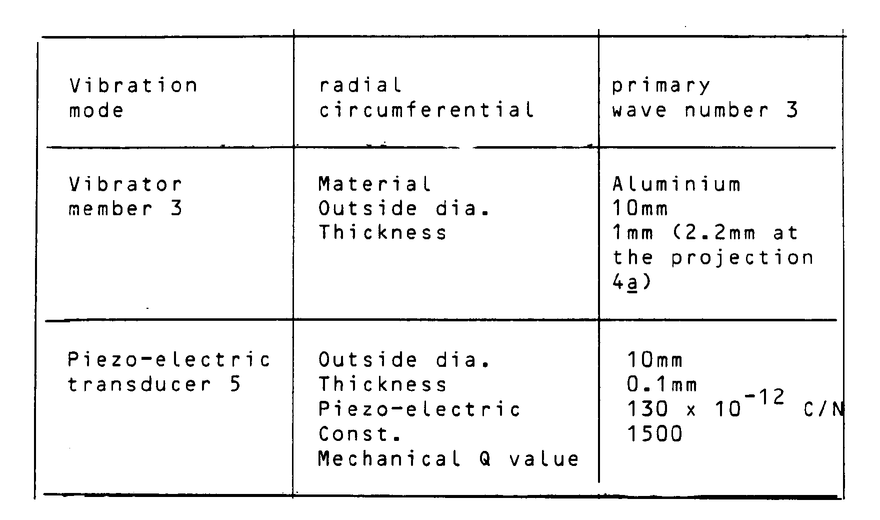

It will be understood from Figure 18 that spurious waves are not observed except at the main resonance point.

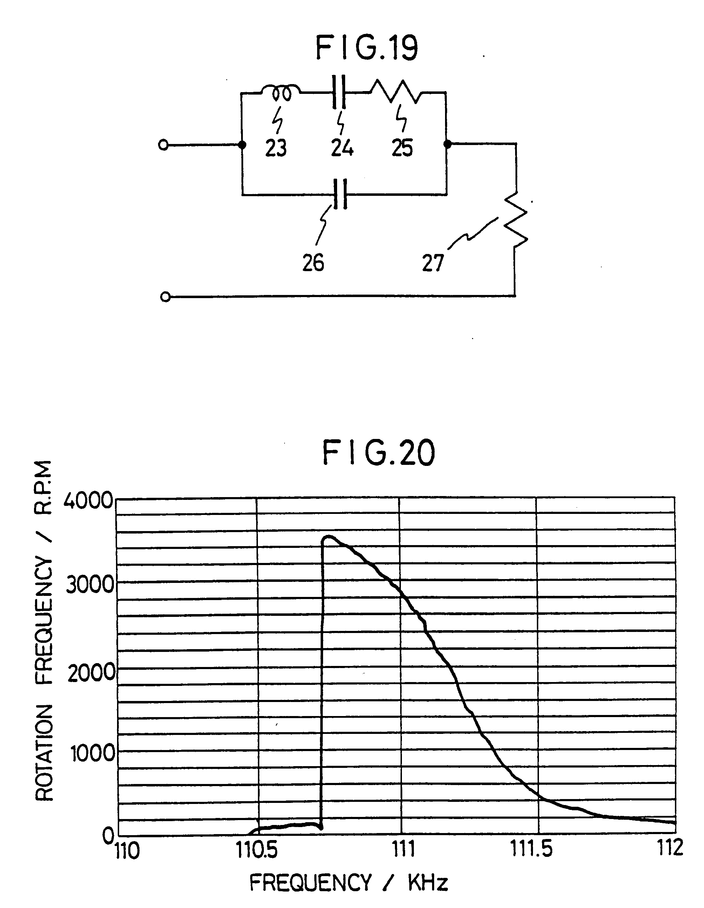

The travelling-wave motor shown in Figure 17 can be represented by an equivalent electrical circuit as shown in Figure 19. In Figure 19, the electrical components 23, 24, 25, 26 and 27 represent the series impedance, the series capacitance, the series resistance, the parallel capacitance and the load resistance respectively. The value of the series resistance 25 represents the loss in the travelling motor, e.g. the internal loss of the vibrator and the mechanical loss at the supporting portion. Thus, the value of the series resistance 25 represents the efficiency of the electrode structure of the piezo-electric vibrator.

The equivalent constants of the travelling-wave motor shown in Figure 17 using the electrode structure shown in Figure 11 and the travelling-wave motor having the same construction as shown in Figure 17 but using the prior electrode structure shown in Figure 6 are described below.

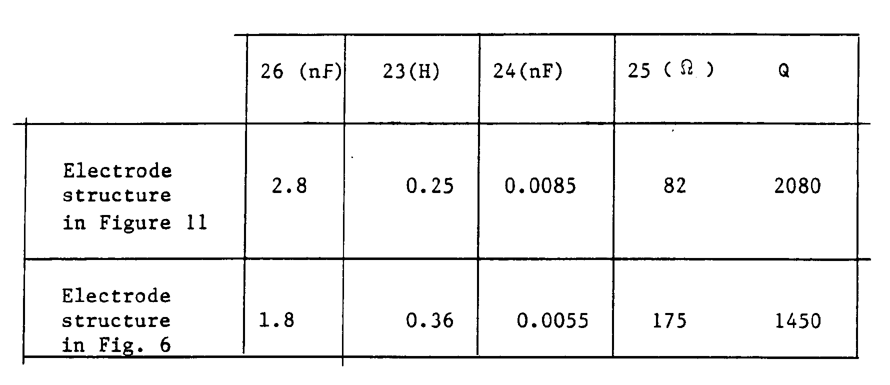

The value of the series resistance 25 when the electrode structure shown in Figure 11 is used, is about half that when the prior art structure shown in Figure 6 is used.

It will thus be understood from these values of the series resistance 25 that the electrode structure shown in Figure 11 is more efficient than that shown in Figure 6.

Figure 20 shows one example of the frequency-rotation frequency characteristic of the travelling-wave motor shown in Figure 17 using the electrode structure shown in Figure 11. The characteristic is measured on the basis that the driving voltage is 6 Vp-p in the sine wave, and that the contact pressure of the movable member 6 on the vibrator member 3 is about 10 gf. It will be understood from Figure 20 that the rotation frequency varies in a relatively wide range and that the maximum rotation frequency is over 3000 r.p.m. A high efficiency of operation may thus be realized in the case of a thin, small travelling-wave motor in accordance with the present invention.

The travelling wave motor of the present invention may be used in the field of precision equipment. For example, when employed as a motor of an electronic timekeeper or timepiece, an advantage which was never achieved by the prior art, may be secured such that the number of gears in the gear train can be reduced. Moreover, a reversible drive can be achieved with a low-speed high torque free from being influenced by magnets. Additionally, a shock will have little influence on the high holding torque.

## Claims

1. A travelling-wave motor comprising a support shaft (1); a vibrator member (3) which is supported by the support shaft (1); vibration-effecting means (5) for effecting vibration of the vibrator member (3) so as to generate travelling waves therein; and a movable member (6), a portion (8) of which contacts a part (4) of the vibrator member (3) so as, in operation, to be moved by the said travelling waves, wherein the said travelling waves are generated in the vibrator member (3) radially of the support shaft (1), and wherein the said part (4) of the vibrator member (3) is situated at an output extracting position of the vibrator member (3) set inwardly of the outermost periphery thereof, characterised in that the travelling waves are generated in a primary oscillation mode.

2. A travelling-wave motor as claimed in claim 1 characterised in that the movable member (6) is rotatably mounted on the support shaft (1).

3. A travelling-wave motor as claimed in claim 1 or 2 characterised in that urging means (7) are provided for urging the said portion (8) of the movable member (6) and the said part (4) of the vibrator member (3) relatively into contact with each other.

4. A travelling-wave motor as claimed in claim 3 characterised in that the urging means (7) directly engages the movable member (6) so as to urge the said portion (8) into contact with the said part (4).

5. A travelling-wave motor as claimed in claim 3 or 4 when dependent on claim 2 characterised in that the urging means (7) is fixed to the support shaft (1).

6. A travelling-wave motor as claimed in any preceding claim characterised in that the vibrator member (3) is firmly fixed to or is integral with the support shaft (1).

7. A travelling-wave motor as claimed in any preceding claim characterised in that the said portion (8) of the movable member (6) contacts the said part (4) of the vibrator member (3) substantially inwardly of the outer periphery of the latter.

8. A travelling-wave motor as claimed in claim 7 characterised in that the vibrator member (3) is disc-shaped and 2/5r < a < 4/5r, where r is the radius of the vibrator member (3) and a is the radial distance of the centre of the said part (4) from the centre of the vibrator member (3).

9. A travelling-wave motor as claimed in any preceding claim characterised in that the said portion (8) is constituted by an annular projection of the movable member (6).

10. A travelling-wave motor as claimed in any preceding claim characterised in that the said part of the vibrator member (3) is constituted by an annular projection (4a) of the latter.

11. A travelling-wave motor as claimed in claim 10 in which the annular projection (4a) of the vibrator member (3) is of toothed form.

12. A travelling-wave motor as claimed in claim 10 or 11 characterised in that the thickness of the vibrator member (3) radially inwardly of its annular projection (4a) is less than its thickness radially outwardly thereof.

13. A travelling-wave motor as claimed in any of claims 10-12 when dependent upon claim 9 characterised in that the radial breadth of the annular projection (8) of the movable member (6) is less than that of the annular projection (4a) of the vibrator member (3).

14. A travelling-wave motor as claimed in any preceding claim characterised in that the support shaft (1) is made of an electrically conductive material.

15. A travelling-wave motor as claimed in any preceding claim characterised in that the vibration-effecting means (5) comprises a disc-shaped piezo-electric vibrator carried by the vibrator member (3) and provided with a plurality of angularly spaced apart electrodes (9a - 9d) arranged around a central hole (5g).

16. A travelling-wave motor as claimed in claim 15 characterised in that the electrodes (9a - 9d) are divided into first and second groups of angularly spaced apart electrodes whose electrodes are electrically connected to each other and are arranged alternately of the electrodes of the other group.

17. A travelling-wave motor as claimed in claim 15 or 16 characterised in that there are pairs of adjacent electrodes (9a,9b; 9c,9d) of the same polarity which are arranged between pairs of adjacent electrodes of the opposite polarity.

18. A travelling-wave motor as claimed in claim 17 when dependent upon claim 16 characterised in that adjacent electrodes of each said group are of opposite polarity.

19. A travelling-wave motor as claimed in any of claims 16-18 characterised in that the electrodes (9a,9c) of the first group are electrically interconnected by an electrode (9f) disposed adjacent the central hole (5a) in the piezo-electric vibrator (5), and the electrodes (9b,9d) of the second group are electrically interconnected by an electrode (9e) disposed adjacent the outer periphery of the piezo-electric vibrator (5).

20. A travelling-wave motor as claimed in any of claims 15-18 characterised in that the outermost and/or innermost peripheral portions (16,17) of the piezo-electric vibrator (5) are left blank of electrodes.

21. A travelling-wave motor as claimed in any of claims 15-20 characterised in that alternate electrodes (20a-20 ) respectively extend radially outwardly and radially inwardly of the adjacent electrodes.

22. A travelling-wave motor as claimed in any of claims 15-21 characterised in that at least one of the electrodes has a marking portion (19a) to indicate its polarization.

23. A travelling-wave motor as claimed in any preceding claim characterized in that the support shaft is a centre shaft (1) which supports the piezo-electric vibrator (5), and there are electrical lead wires (14a, 14b) connected to the respective electrode for the transmission of an electrical input signal to the piezo-electric vibrator (5) at a point near the support shaft (1).

## Patentansprüche

1. Wanderwellenmotor, umfassend: eine Haltewelle (1); ein Schwingelement (3), das von der Haltewelle (1) gehalten ist; Schwingungsbewirkungsmittel (5) zum Bewirken von Schwingungen des Schwingelements (3), um in diesem Wanderwellen zu erzeugen; und ein bewegliches Element (6), von dem ein Abschnitt (8) ein Teil (4) des Schwingelements (3) berührt, so daß es bei Betrieb von den Wanderwellen bewegt wird, wobei die Wanderwellen in dem Schwingelement (3) radial der Haltewelle (1) erzeugt werden und wobei das Teil (4) des Schwingelements (3) an einer innerhalb dessen äußersten Umfangs befindlichen Ausgangsentnahmestelle des Schwingelements (3) angeordnet ist,
dadurch gekennzeichnet,
daß die Wanderwellen in einem primären Schwingmodus erzeugt werden.

2. Wanderwellenmotor nach Anspruch 1,
dadurch gekennzeichnet,
daß das bewegliche Element (6) an der Haltewelle (1) drehbar angebracht ist.

3. Wanderwellenmotor nach Anspruch 1 oder 2,
dadurch gekennzeichnet,
daß Spannmittel (7) vorgesehen sind, um den Abschnitt (8) des beweglichen Elements (6) und das Teil (4) des Schwingelements (3) in relativen Kontakt miteinander zu spannen.

4. Wanderwellenmotor nach Anspruch 3,
dadurch gekennzeichnet,
daß das Spannmittel (7) das bewegliche Element (6) direkt ergreift, um den Abschnitt (8) in Kontakt mit dem Teil (4) zu spannen.

5. Wanderwellenmotor nach Anspruch 3 oder 4, sofern von Anspruch 2 abhängig,
dadurch gekennzeichnet,
daß das Spannmittel (7) zu der Haltewelle (1) fest ist.

6. Wanderwellenmotor nach einem der vorhergehenden Ansprüche,
dadurch gekennzeichnet,
daß das Schwingelement (3) an der Haltewelle (1) starr befestigt oder mit dieser einstückig ist.

7. Wanderwellenmotor nach einem der vorhergehenden Ansprüche,
dadurch gekennzeichnet,
daß der Abschnitt (8) des beweglichen Elements (6) das Teil (4) des Schwingelements (3) wesentlich innerhalb dessen Außenumfangs berührt.

8. Wanderwellenmotor nach Anspruch 7,
dadurch gekennzeichnet,
daß das Schwingelement (3) scheibenförmig und 2/5r < a < 4/5r ist, wobei r der Radius des Schwingelements (3) ist und a der radiale Abstand der Mitte des Teils (4) von der Mitte des Schwingelements (3) ist.

9. Wanderwellenmotor nach einem der vorhergehenden Ansprüche,
dadurch gekennzeichnet,
daß der Abschnitt (8) durch einen Ringvorsprung des beweglichen Elements (6) gebildet ist.

10. Wanderwellenmotor nach einem der vorhergehenden Ansprüche,
dadurch gekennzeichnet,
daß das Teil des Schwingelements (3) durch einen Ringvorsprung (4a) des letzteren gebildet ist.

11. Wanderwellenmotor nach Anspruch 10, in dem der Ringvorsprung (4a) des Schwingelements (3) eine gezahnte Form hat.

12. Wanderwellenmotor nach Anspruch 10 oder 11,
dadurch gekennzeichnet,
daß die Dicke des Schwingelements (3) radial innerhalb seines Ringvorsprungs (4a) geringer als seine Dicke radial außerhalb von diesem ist.

13. Wanderwellenmotor nach einem der Ansprüche 10 bis 12, sofern von Anspruch 9 abhängig,
dadurch gekennzeichnet,
daß die radiale Breite des Ringvorsprungs (8) des beweglichen Elements (6) geringer als die des Ringvorsprungs (4a) des Schwingelements (3) ist.

14. Wanderwellenmotor nach einem der vorhergehenden Ansprüche,
dadurch gekennzeichnet,
daß die Haltewelle (1) aus elektrisch leitfähigem Material hergestellt ist.

15. Wanderwellenmotor nach einem der vorhergehenden Ansprüche,
dadurch gekennzeichnet,
daß das Schwingungsbewirkungsmittel (5) ein scheibenförmiges piezoelektrisches Schwingglied aufweist, das von dem Schwingelement (3) gehalten ist und mit einer Mehrzahl von mit Winkelabstand angeordneten Elektroden (9a bis 9d) versehen ist, die um ein Mittelloch (5g) herum angeordnet sind.

16. Wanderwellenmotor nach Anspruch 15,
dadurch gekennzeichnet,
daß die Elektroden (9a bis 9d) in erste und zweite Gruppen von mit Winkelabstand angeordneten Elektroden unterteilt sind, deren Elektroden elektrisch miteinander verbunden sind und abwechselnd zu den Elektroden der anderen Gruppe angeordnet sind.

17. Wanderwellenmotor nach Anspruch 15 oder 16,
dadurch gekennzeichnet,
daß Paare benachbarter Elektroden (9a, 9b; 9c, 9d) gleicher Polarität vorhanden sind, die zwischen Paaren benachbarter Elektroden der entgegengesetzten Polarität angeordnet sind.

18. Wanderwellenmotor nach Anspruch 17, sofern von Anspruch 16 abhängig,
dadurch gekennzeichnet,
daß benachbarte Elektroden jeder Gruppe entgegengesetzter Polarität sind.

19. Wanderwellenmotor nach einem der Ansprüche 16 bis 18,
dadurch gekennzeichnet,
daß die Elektroden (9a, 9c) der ersten Gruppe durch eine Elektrode (9f) elektrisch miteinander verbunden sind, die nahe dem Mittelloch (5a) des piezoelektrischen Schwingglieds (5) angeordnet ist, und die Elektroden (9b, 9d) der zweiten Gruppe durch eine Elektrode (9e) elektrisch miteinander verbunden sind, die nahe dem Außenumfang des piezoelektrischen Schwingglieds (5) angeordnet ist.

20. Wanderwellenmotor nach einem der Ansprüche 15 bis 18,
dadurch gekennzeichnet,
daß die äußersten und/oder innersten Umfangsabschnitte (16, 17) des piezoelektrischen Schwingglieds (5) von Elektroden freigelassen sind.

21. Wanderwellenmotor nach einem der Ansprüche 15 bis 20,
dadurch gekennzeichnet,
daß abwechselnde Elektroden (20a bis 20l) jeweils radial außerhalb und radial innerhalb der benachbarten Elektroden verlaufen.

22. Wanderwellenmotor nach einem der Ansprüche 15 bis 21,
dadurch gekennzeichnet,
daß wenigstens eine der Elektroden einen Markierungsabschnitt (19a) zur Bezeichnung seiner Polarisierung aufweist.

23. Wanderwellenmotor nach einem der vorhergehenden Ansprüche,
dadurch gekennzeichnet,
daß die Haltewelle eine Mittelwelle (1) ist, die das piezoelektrische Schwingglied (5) hält, und daß elektrische Leitungsdrähte (14a, 14b) an die jeweilige Elektrode zur Übertragung eines elektrischen Eingangssignals zu dem piezoelektrischen Schwingglied (5) an einer Stelle nahe der Haltewelle (1) angeschlossen sind.

## Revendications

1. Moteur à ondes progressives comprenant un axe (1) support; une table de vibration (3) qui est supportée par l'axe (1) support ; des moyens (5) vibrants destinées à faire vibrer la table (3) de vibration de manière à y produire des ondes progressives ; et un élément (6) amovible, dont une partie (8) est en contact avec une partie (4) de la table (3) de vibration, de sorte que, lors du fonctionnement, cet élément amovible soit mis en mouvement par les ondes progressives, dans lequel ces ondes progressives sont produites dans la table (3) de vibration radialement à l'axe (1) support, et dans lequel la partie (4) de la table (3) de vibration se trouve en une position d'extraction de sortie de la table (3) de vibration disposée à l'intérieur du pourtour le plus à l'extérieur de celle-ci, caractérisé en ce que les ondes progressives sont produites selon un mode d'oscillation fondamental.

2. Moteur à ondes progressives selon la revendication 1, caractérisé en ce que l'élément (6) amovible est monté pivotant sur l'axe (1) support.

3. Moteur à ondes progressives selon la revendication 1 ou 2, caractérisé en ce que des moyens (7) pressoirs sont prévus pour maintenir par pression la partie (8) de l'élément (6) amovible et la partie (4) de la table (3) de vibration en contact mutuel.

4. Moteur à ondes progressives selon la revendication 3, caractérisé en ce que les moyens (7) pressoirs sont directement en prise avec l'élément (6) amovible, de manière à maintenir par pression la partie (8) en contact avec la partie (4).

5. Moteur à ondes progressives selon la revendication 3 ou 4, lorsque dépendante de la revendication 2, caractérisé en ce que les moyens (7) pressoirs sont fixés à l'axe (1) support.

6. Moteur à ondes progressives selon l'une quelconque des revendications précédentes, caractérisé en ce que la table (3) de vibration est fixée fermement à l'axe (1) support ou est d'une pièce avec celui-ci.

7. Moteur à ondes progressives selon l'une quelconque des revendications précédentes, caractérisé en ce que la partie (8) de l'élément (6) amovible est en contact avec la partie (4) de la table (3) de vibration sensiblement vers l'intérieur du pourtour extérieur de cette dernière.

8. Moteur à ondes progressives selon la revendication 7, caractérisé en ce que la table (3) de vibration a la forme d'un disque et son rayon r et la distance radiale a du centre de la partie (4) au centre de la table (3) de vibration sont tels que: 2r/5 < a < 4r/5.

9. Moteur à ondes progressives selon l'une quelconque des revendications précédentes, caractérisé en ce que la partie (8) est constituée d'une saillie de forme annulaire de l'élément (6) amovible.

10. Moteur à ondes progressives selon l'une quelconque des revendications précédentes, caractérisé en ce que la partie de la table (3) de vibration est constituée d'une saillie (4a) de forme annulaire de cette dernière.

11. Moteur à ondes progressives selon la revendication 10, dans lequel la saillie de forme annulaire (4a) de la table (3) de vibration a une forme dentée.

12. Moteur à ondes progressives selon la revendication 10 ou 11, caractérisé en ce que l'épaisseur de la table (3) de vibration, selon la direction radialement vers l'intérieur de sa saillie (4a) de forme annulaire, est inférieure à son épaisseur dans la direction radialement vers l'extérieur.

13. Moteur à ondes progressives selon l'une des revendications 10 à 12 lorsque dépendantes de la revendication 9, caractérisé en ce que la largeur radiale de la saillie (8) de forme annulaire de l'élément (6) amovible est inférieure à celle de la saillie (4a) de forme annulaire de la table (3) de vibration.

14. Moteur à ondes progressives selon l'une quelconque des revendications précédentes, caractérisé en ce que l'axe (1) support est en un matériau conducteur de l'électricité.

15. Moteur à ondes progressives selon l'une quelconque des revendications précédentes, caractérisé en ce que les moyens (5) vibrants comprennent un excitateur de vibration piézo-électrique en forme de disque porté par la table (3) de vibration et muni d'une pluralité d'électrodes (9a ; 9d) à distance angulaire les unes des autres disposées autour d'un trou (5g) central.

16. Moteur à ondes progressives selon la revendication 15, caractérisé en ce que les électrodes (9a ; 9d) sont divisées en un premier et un second groupe d'électrodes à distance angulaire les unes des autres, les électrodes de chacun de ces groupes étant connectées électriquement les unes aux autres et disposées en alternance avec les éléctrodes de l'autre groupe.

17. Moteur à ondes progressives selon la revendcation 15 ou 16, caractérisé en ce qu'il y a des paires d'électrodes (9a, 9b ; 9c, 9d) adjacentes de même polarité qui sont disposées entre des paires d'électrodes adjacentes de la polarité opposée.

18. Moteur à ondes progressives selon la revendication 17 lorsque dépendante de la revendication 16, caractérisé en ce que des électrodes adjacentes de chacun des groupes sont de polarité opposée.

19. Moteur à ondes progressives selon l'une des revendications 16 à 18, caractérisé en ce que les électrodes (9a, 9c) du premier groupe sont interconnectées électriquement par une électrode (9f) disposée adjacente au trou (5a) central dans l'excitateur (5) de vibration piézo-électrique et les électrodes (9b, 9d) du second groupe sont interconnectées électriquement par une électrode (9e) disposée adjacente au pourtour extérieur de l'excitateur (5) de vibration piézo-électrique.

20. Moteur à ondes progressives selon l'une quelconque des revendications 15 à 18, caractérisé en ce que les parties (16, 17) périphériques, la plus à l'extérieur et/ou la plus à l'intérieur de l'excitateur (5) de vibration piézo-électrique, sont laissées sans électrode.

21. Moteur à ondes progressives selon l'une quelconque des revendications 15 à 20, caractérisé en ce que des électrodes (20a 20) s'étendent alternativement vers l'extérieur radialement et vers l'intérieur radialement par rapport aux électrodes adjacentes.

22. Moteur à ondes progressives selon l'une quelconque des revendications 15 à 21, caractérisé en ce qu'au moins une des électrodes a une partie (19a) de marquage pour indiquer sa polarisation.

23. Moteur à ondes progressives selon l'une quelconque des revendications précédentes, caractérisé en ce que l'axe support est un axe (1) central qui supporte l'excitateur (5) de vibration piézo-électrique, et des fils (14a, 14b) conducteurs électriques sont connectés à l'électrode correspondante pour la transmission d'un signal d'entrée électrique à l'excitateur (5) de vibration piézo-électrique en un point proche de l'axe (1) support.
